# EUROPÄISCHE PATENTSCHRIFT

(11) **EP 1 032 517 B1**
(45) Veröffentlichungstag und Bekanntmachung des Hinweises auf die Patenterteilung: **26.01.2005**
(21) Anmeldenummer: 98958906.4
(22) Anmeldetag: 20.11.1998
(51) Int. Cl.: B60T 8/00, B60T 7/04, B60T 13/74, B60R 16/02, G05B 9/03, B60T 13/66

(54) **ELEKTROMECHANISCHES BREMSSYSTEM**
ELECTROMECHANICAL BRAKE SYSTEM
SYSTEME DE FREINAGE ELECTROMECANIQUE

(30) Priorität: 22.11.1997 DE 19751906; 18.11.1998 DE 19853036
(43) Veröffentlichungstag der Anmeldung: 06.09.2000
(73) Patentinhaber: Continental Teves AG & Co. oHG, 60488 Frankfurt (DE)
(72) Erfinder: STÖLZL, Stefan, D-69469 Weinheim (DE); GIERS, Bernhard, D-60320 Frankfurt (DE); OEHLER, Rainer, D-64295 Darmstadt (DE); WILLIMOWSKI, Peter, D-63486 Bruchköbel (DE); BÖHM, Jürgen, D-65558 Oberneisen (DE); NELL, Joachim, D-63452 Hanau (DE); HOFFMANN, Oliver, D-60486 Frankfurt (DE)
(86) Internationale Anmeldenummer: PCT/EP1998/007448
(87) Internationale Veröffentlichungsnummer: WO 1999/026820

(56) Entgegenhaltungen:
- WO-A-95/13946
- WO-A-97/06487
- WO-A-98/36956
- DE-A- 19 509 133
- DE-A- 19 529 434
- DE-C- 19 617 285

## Beschreibung

Die Erfindung betrifft ein elektromechanisches Bremssystem, insbesondere für Kraftfahrzeuge, mit einer Fahrerbremswunsch-Erfassungseinrichtung zum redundanten Erfassen einer Fahrerbetätigung eines Bremspedals mittels einer geeigneten Sensorik, einem Zentralmodul zum Ermitteln eines Bremssollwerts basierend auf Ausgangssignalen der Sensorik, zumindest einem Bremsmodul zum Ansteuern von zumindest einer Radbremse basierend auf dem Bremssollwert, und einer Datenübertragungseinheit, die eine Datenverbindung zwischen dem Zentralmodul und dem Bremsmodul herstellt, wobei das Zentralmodul eine Fehlererkennungsschaltung aufweist, die einen Fehler bei der Ermittlung des Bremssollwerts erkennt.

Die Untersuchung elektrischer Bremssysteme ist Bestandteil der Entwicklungen in der heutigen Bremsentechnik. Die Hydraulikzylinder, die heute die Bremsbeläge gegen die Bremsscheibe pressen, werden an jeder Scheibe durch einen leistungsfähigen Elektromotor ersetzt. Die elektrische Bremse benötigt keine mechanischen oder hydraulischen Teile, wie Vakuumbremskraftverstärker oder Tandemhauptzylinder. Weiterhin kann die elektrische Bremse heutige und auch zukünftige Funktionen einer Bremse übernehmen, wie die Funktionen eines Antiblockiersystems (ABS), einer Traktionshilfe oder einer Antriebsschlupfregelung (ASR), einer Fahrstabilitätsregelung (Electronic Stability Program oder ESP) sowie eines automatischen Bremseneingriffs, wie er beispielsweise bei Abstandsregelsystemen vorgesehen sein kann.

Ein Beispiel für ein solches System ist in der WO 95/13946 gezeigt. Dieses sog. elektronische Bremssystem weist ein Zentralmodul und den Bremskreisen oder Radbaugruppen zugeordnete Bremsmodule auf. Das Zentralmodul kann hierbei ABS-/ ASR-Berechnungen durchführen, kann die Bremskraftverteilung einstellen und radspezifische Bremsdruck-Sollwerte ermitteln.

Aus der DE 195 29 434 A1 (P 7959) ist ein Mikroprozessorsystem bekannt, bei dem zwei synchron betriebene Zentraleinheiten, die die gleichen Eingangsinformationen erhalten und das gleiche Programm abarbeiten, auf einem oder auf mehreren Chips vorgesehen sind. Die beiden Zentraleinheiten sind dabei über separate Bus-Systeme an die Festwert- und an die Schreib-Lese-Speicher sowie an Eingabe- und Ausgabeeinheiten angeschlossen. Die Bus-Systeme sind untereinander durch Treiberstufen bzw. Bypässe verbunden, die den beiden Zentraleinheiten ein gemeinsames Lesen und Abarbeiten der zur Verfügung stehenden Daten, einschließlich von Prüfdaten und Befehle ermöglichen. Das System ermöglicht eine Einsparung von Speicherplatz. Nur eine der beiden Zentraleinheiten ist mit einem vollwertigen Festwert- und einem Schreib-Lese-Speicher verbunden, während die Speicherkapazität des zweiten Prozessors auf Speicherplätze für Prüfdaten beschränkt ist. Zugriff zu allen Daten besteht □über die Bypässe. Dadurch sind beide Zentraleinheiten in der Lage, jeweils das vollständige Programm abzuarbeiten.

In den Anmeldungsschriften DE 197 16 197 A1 (P 9009) und DE 197 20 618 A1 (P 9018) sind Mikroprozessorsysteme für sicherheitskritische Regelungen beschrieben, die mit mindestens drei, möglichst auf einem Chip angeordneten Zentraleinheiten, die das gleiche Programm abarbeiten, ausgerüstet sind. Außerdem sind Festwertspeicher und Schreib-Lese-Speicher mit zusätzlichen Speicherplätzen für Prüfdaten, Eingabe- und Ausgabeeinheiten und Vergleicher vorhanden, die die Ausgangssignale der Zentraleinheiten auf Übereinstimmung überprüfen. Die Zentraleinheiten sind über Bus-Systeme untereinander verbunden, die den Zentraleinheiten ein gemeinsames Lesen und Abarbeiten der anstehenden Daten, einschließlich der Prüfdaten und Befehle, nach dem gleichen Programm ermöglichen.

In der gattungsgemäßen DE 195 10 525 A1 ist ein Verfahren zur Steuerung oder Regelung der Bremsanlage eines Fahrzeugs offenbart, bei dem eine Bremspedalbetätigung durch den Fahrer durch mindestens zwei Meßeinrichtungen für zwei unterschiedliche Größen erfaßt wird und bei dem aus den erfaßten Signalen der Bremswunsch des Fahrers ermittelt wird, in Sollwerte für Radbremsen umgesetzt wird und die Radbremsen entsprechend gesteuert oder geregelt werden, wobei der Bremswunsch des Fahrers jeweils unabhängig voneinander aus den mindestens zwei Größen gebildet und weiterverarbeitet wird.

Die Zentraleinheiten sind bei diesen bekannten Systemen zu zwei vollständigen Regelungssignalkreisen erweitert und derart zusammengeschaltet, daß bei einem Ausfall durch Majoritätsentscheid die fehlerhafte Zentraleinheit identifiziert und eine Notlauffunktion aufrecht erhalten werden kann.

Schließlich ist aus der DE 197 17 686 A1 eine Schaltungsanordnung bekannt, die sich ebenfalls für ein sicherheitskritisches Regelungssystem eignet und die zweioder mehrkreisig aufgebaut ist, wobei jeder Kreis ein komplettes Mikroprozessorsystem enthält, welches die Eingangsdaten redundant verarbeitet und beim Auftreten eines Fehlers bzw. einer Abweichung zwischen den redundant gewonnenen Datenverarbeitungsergebnissen ein Fehlererkennungssignal liefert. Bei Fehlererkennung erfolgt ein Übergang in eine Notlauffunktion, in der entweder ein Kreis abgeschaltet oder die Aktuatorbetätigung beider Kreise von dem intakten Mikroprozessorsystem übernommen wird. Die beiden Systeme sind mit eigener Peripherie, bestehend aus Signalerfassung, Aktuatorbetätigung und Energieversorgung (7,8), versehen.

Der vorliegenden Erfindung liegt die Aufgabe zugrunde, ein elektromechanisches Bremssystem zum Ansteuern von einer Radbremse, insbesondere für Kraftfahrzeuge, zu realisieren, das sicher und dabei kostengünstig aufgebaut ist sowie einen geringen Installationsaufwand benötigt.

Diese Aufgabe wird gemäß den Merkmalen des unabhängigen Patentanspruchs gelöst. Die abhängigen Patentansprüche zeigen vorteilhafte Ausführungsformen und Weiterentwicklungen der Erfindung auf.

Die Erfindung beruht auf der Überlegung, daß bei Verwendung einer für sicherheitskritische Regelungssysteme geeigneten, redundant ausgelegten und notlauffähigen Schaltungsanordnung der vorgenannten Art auch die die für ein Brake-by-Wire System erforderliche Betriebssicherheit gewährleistet werden kann. Auf eine redundante Auslegung der Rechnermodule, die zur Ansteuerung der einzelnen Radmodule dienen, kann dann verzichtet werden. Für die Bussysteme, die die Regelungsschaltung(en) mit den Radmodulen verbinden, ist dann ebenfalls Redundanz entbehrlich. Durch mindestens ein Signal, welches Aufschluss über das Raddrehverhalten gibt, wird der Zustand des Radmoduls überwacht; über einen Abschaltpfad kann das Radmodul im Fehlerfall in den sicheren Zustand überführt werden.

Erfindungsgemäß enthält ein elektromechanisches Bremssystem, insbesondere für Kraftfahrzeuge, einen Pedalsimulator zum redundanten Erfassen einer Fahrerbetätigung eines Bremspedals mittels einer geeigneten Sensorik. Weiterhin wird ein Zentralmodul vorgesehen, das einen Bremssollwert basierend auf den Ausgangssignalen der Sensorik ermittelt. Darüber hinaus wird zumindest ein Bremsmodul zum Ansteuern von zumindest einer Radbremse vorgesehen, wobei die Ansteuerung basierend auf dem Bremssollwert erfolgt. Weiterhin ist eine Datenübertragungseinheit vorgesehen, die eine Datenverbindung zwischen dem Zentralmodul und dem Bremsmodul herstellt, wobei das Zentralmodul eine Fehlererkennungsschaltung aufweist, die einen Fehler bei der Ermittlung des Bremssollwerts erkennt.

Wichtig ist, daß das Zentralmodul Notlauffähigkeit besitzt und dadurch zu der verlangten hohen Betriebssicherheit des Systems einen entscheidenden Beitrag leisten kann.

Das Zentralmodul berücksichtigt zur Ermittlung des Bremssollwerts höhere Funktionen des Bremssystems und weist weiterhin zumindest drei redundante Rechner auf, die den Bremssollwert basierend auf den Ausgangssignalen der Sensorik ermitteln. Weiterhin sind auf zumindest zwei dieser redundanten Rechner des Zentralmoduls höhere Funktionen (ABS, ASR, ESP...) des Bremssystems implementiert.

Gemäß der Erfindung lassen sich sowohl die Radbremsmodule bzw. die Radbremsen als Einzelsysteme mit einer einfachen Schnittstelle, als auch ein kostengünstiges Gesamtsystem anbieten. Das gilt insbesondere, wenn das Zentralmodul im Pedalsimulator integriert ist. Weiterhin kann mit der erfindungsgemäßen Systemarchitektur ohne weitere Nachteile, wie einem erhöhten Verkabelungsaufwand oder einer mangelnden Störsicherheit eine Diagonal- oder eine TT-Kreisaufteilung realisiert werden. Der Installationsaufwand für den Kfz-Hersteller ist minimal und der Verkabelungsaufwand nur sehr gering. Weiterhin sind klare und einfache Schnittstellen beim Zentralmodul und bei den Radmodulen vorgesehen, so daß eine einfache Testbarkeit des Gesamtsystems ermöglicht wird und der Kommunikationsaufwand zwischen den einzelnen Modulen reduziert werden kann. Durch kurze Analogleitungen und einem Leistungsverstärker, der nahe dem Aktor vorgesehen ist, ergibt sich eine hohe aktive und passive Störsicherheit. Weiterhin kann erfindungsgemäß eine sehr geringe Degradation (Funktionsverlust) im Fehlerfall erzielt werden. Zudem ist ein sicherheitskritisches Zuspannen einer Bremse - mit und ohne Vorliegen eines Bremswunsches - infolge eines Fehlers in einem Rechner, der Leistungselektronik oder des Aktors mit Sensoren nicht möglich.

Im folgenden werden Ausführungsbeispiele der Erfindung anhand der beiliegenden schematischen Zeichnung näher erläutert.

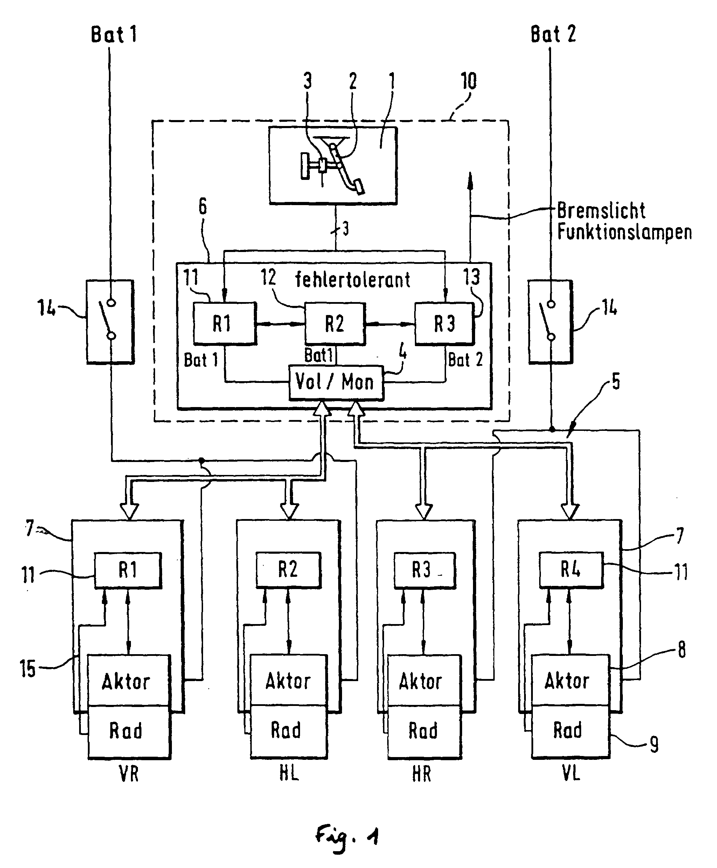

Die Figur zeigt ein schematisches Blockschaltbild gemäß einer Ausführungsform der Erfindung.

Die Figur zeigt einen Pedalsimulator 1 mit einem schematisch angedeuteten Bremspedal 2. Das Bremspedal 2 bzw. die Bewegung des Bremspedals 2 kann beispielsweise über eine Sensorik 3, die mindestens drei Sensoren aufweist, erfaßt werden. Es können z.B. zwei Wegsensoren und ein Kraftsensor verwendet werden. Die Ausgangssignale dieser Sensorik 3 können analoge Ausgangssignale sein. Es ist jedoch auch denkbar, daß die Sensorik insgesamt oder teilweise Digitalausgaben oder andere Ausgaben oder andere Meßgrößen erzeugt.

Diese Ausgangssignale werden pro Signal (z. B. über getrennte Leitungen) zu einem Zentralmodul 6 geführt und dort in getrennten Meßkanälen erfaßt. Diese Meßkanäle können nicht dargestellte Analog-/Digital-Wandler aufweisen, die Analogsignale in Digitalsignale umwandeln können.

Es ist jedoch auch denkbar, daß die redundanten Signale des Pedalsimulators 1 lediglich einfach zum Zentralmodul 6 übertragen werden und dort jeweils auf zumindest zwei Meßkanäle aufgeteilt werden. Wenn beispielsweise drei Pedalsensoren verwendet werden, ist es günstig, die Signale auf drei getrennte Meßkanäle bzw. drei getrennte Analog-/Digital-Wandler zu führen (sofern die Pedalsensoren Analogsignale ausgeben), wobei mindestens zwei der Rechner 11, 12, 13 des Zentralmoduls 6 die gewandelten Daten erhalten. Dadurch erhalten die beiden Rechner des Zentralmoduls 6 identische Eingangsdaten.

An dieser Stelle soll angemerkt werden, daß die vom Pedalsimulator 1 übertragenen Daten fehlerhaft sein können. Die Datenkonsolidierung, d.h. die Erkennung defekter Sensoren oder Hardware (z.B. des Verstärkers oder der A/D-Wandler) und die Ermittlung des Bremssollwerts erfolgt im Zentralmodul 6.

Weiterhin ist je ein Datenbus 5 vorgesehen, welcher das Zentralmodul 6 mit je zwei Bremsmodulen 7 verbindet, wobei die Bremsmodule 7 jeweils ein Aktor/Rad-Paar 8, 9 enthalten. Jedes Aktor/Rad-Paar 8, 9 ist hierbei einem Fahrzeugrad zugeordnet (VR-vorne rechts, VL-vorne links, HR-hinten rechts und HL-hinten links).

Im folgenden soll nun beispielhaft eine Funktionsbeschreibung der Systemarchitektur gemäß der Figur gegeben werden.

Zusammenfassend betrifft die Erfindung Architektur-Redundanz- und Sicherheitskonzepte für elektromechanische Bremssysteme (Brake-by-Wire). Das Bremssystem enthält den Pedal-Simulator 1 mit redundanter Sensorik 3, ein dreifachredundantes Zentralmodul 6 und vier Radbremsmodule 7. Die Radbremsmodule 7 bestehen aus einem Rechner 11 (R1, R2, R3, R4) einer Leistungselektronik, einem Aktor 8, aktorspezifischen Sensoren und einem zugeordneten Rad 9. Das Zentralmodul 6 und die Radmodule 7 sind mit mindestens einem Datenbus 5 verbunden. Weiterhin ist das Zentralmodul 6 in einem Gehäuse 10 des Pedalsimulators 1 integriert.

Der Fahrerbremswunsch wird im Pedalsimulator 1 mit den beispielsweise oben angeführten Sensoren ermittelt, wobei die Sensoren bevorzugt redundant und dissimilar aufgebaut sind (z.B. Pedalweg und Fußkraft). Wie ebenso oben schon angeführt ist, können nur diese Sensorsignale einfach oder doppelt zum Zentralmodul 6 übertragen werden. Die Signale werden hierbei auf mindestens zwei Meßkanäle aufgeteilt, so daß eine Redundanz auch hier erzielt werden kann.

Das Zentralmodul 6 kann zunächst derart ausgebildet sein, daß alle Funktionen (Grundbremsfunktionen, Überwachung des Pedalsimulators 1 und höhere Bremsfunktionen) auf allen Rechnern 11, 12, 13 des Zentralmoduls 6 gleich sind (diese Ausführungsform ist nicht dargestellt). Aus drei Rechenergebnissen wird über eine fehlertolerante Voter/Monitor-Struktur ein fehlerfreier Ausgangswert ermittelt.

Damit ergibt sich eine fehlertolerante Struktur für diese Funktionen.

Wie in der Figur dargestellt ist, kann auch eine dissimilare Aufteilung im Zentralmodul 6 realisiert werden. Hierbei sind die höheren Funktionen (ABS, ASR, ESP usw.) nur auf zwei Rechnern 11, 13 implementiert. Die Ermittlung der Grund-Bremsfunktionen und die Überwachung des Pedalsimulators 1 kann auf allen drei Rechnern 11, 12, 13 implementiert sein. Alle drei Rechner 11, 12, 13 haben Zugriff auf zumindest zwei getrennte Meßkanäle (nicht dargestellt).

Die höheren Funktionen werden durch einen nicht dargestellten Vergleicher überwacht und im Fehlerfall werden diese Funktionen in den Rechnern 11, 13 abgeschaltet, wodurch eine Fail-Silent-Funktion realisiert wird. Insbesondere sei angemerkt, daß bei einem Fehlerfall bei der Ermittlung der höheren Funktionen natürlich nicht notwendigerweise der gesamte Rechner 11, 13 abgeschaltet werden muß, sondern daß es genügen kann, nur den entsprechenden Programmteil zu deaktivieren. Die Ergebnisse der Pedalfunktionen, d.h. die Ermittlung der Grundbremsfunktionen ohne Überlagerung mit den höheren Funktionen werden durch den Voter/Monitor 4 konsolidiert und überwacht. Bei Ausfall der höheren Funktionen wird der Bremssollwert ohne eine Überlagerung durch die höheren Funktionen direkt an die Bremsmodule 7 ausgegeben.

Wenn ein Fehler nur im Bereich der höheren Funktionen auftaucht, sind nach wie vor noch drei Rechner 11, 12, 13 für eine Grundbremsfunktion zur Verfügung, wobei nach wie vor ein fehlerhafter Rechner 11, 12, 13 über den Voter/Monitor 4 isoliert und abgeschaltet werden kann. Der Voter 4 würde beispielsweise aus den drei Ausgängen der Rechner 11, 12, 13 einen Bremssollwert auswählen. Der Monitor würde dann überprüfen, ob das ausgewählte Signals im Vergleich zu den anderen nicht ausgewählten Signalen abweicht (sich verschlechtert oder falsch ist) und würde ein anderes Signal als ausgewähltes Signal wählen, wenn eine Abweichung ermittelt wird.

Die Notwendigkeit, bei einem Fehler zwei der Rechner 11, 12, 13 abzuschalten, besteht nicht. Die Zuverlässigkeit des Bremssystems ist damit gleich oder höher als mit der Rechnerstruktur mit gleicher Aufteilung, siehe oben. Dies gilt natürlich in Verbindung mit dem Vorsehen von zwei Energieversorgungen Bat1, Bat2. Würden drei Energieversorgungen verwendet werden, so könnte bei einer gleichen Aufteilung (siehe oben) eine nochmalige Erhöhung der Redundanz erzielt werden.

Die Bremsmodule 7 bestehen aus einem Bremsmodulrechner 11 (R1, R2, R3, R4) der Leistungselektronik, dem Aktor 8 mit den aktorspezifischen Sensoren (z.B. zur Erfassung des Aktorstroms, der Aktorspannkraft und der Aktorposition) und einer testbaren Abschalteinheit 14 für die Spannungsversorgung des Aktors 8.

Durch die externe Abschalteinheit 14 ist sichergestellt, daß ein Fehler in der Leistungselektronik die Funktion der Abschaltung nicht beeinflußt.

Redundanz innerhalb des Radmoduls 7 ist nicht notwendig, da es vom Zentralmodul 6 überwacht wird. Erkennt das Radmodul 7 selbständig Fehler (z.B. durch elektronische Überwachung der Aktoransteuerung), so kann eine weitere Aktoransteuerung durch entsprechende Ansteuerung der Leistungselektronik im Radmodul 7 ausgeschlossen werden.

Das Zentralmodul 6 kann über entsprechende Rückmeldeleitungen vom Radmodul 7 den Status des Radmoduls überwachen. Vorteilhaft wird hierzu eine Busstruktur, z.B. CAN, eingesetzt.

Weiterhin kann das Zentralmodul 6 Radsensorik, die vom Radmodul 7 nicht durch Fehler beeinflußt werden kann, zur Überwachung nutzen; beispielsweise kann mit Hilfe der Raddrehzahlgeber eine Überwachung des Bremsmomentes durchgeführt werden.

Aus diesen Gründen ist im Radmodul 7 und in den Verbindungen zum Radmodul keine Redundanz erforderlich. Es müssen lediglich geeignete Einrichtungen vorhanden sein, die dem Zentralmodul 6 zur Abschaltung des Leistungspfades für ein oder mehrere Rad-Module zur Verfügung stehen..

Der Bremsmodulrechner des Bremsmoduls 7 braucht nicht failsafe ausgebildet zu werden, d.h. das Bremsmodul 7 erfüllt seine spezifizierte Funktion oder schaltet sich im Fehlerfall selbst ab und meldet die Fehlfunktion oder verhält sich im Falle eines Rechnerfehlers still (failsilent). Als Überwachungsebene ist das Zentralmodul 6 vorhanden.

An dieser Stelle sei weiterhin angemerkt, daß die Brems-Module 7 auch jeweils für zwei Aktor/Rad-Paare 8, 9 verwendet werden können (hierbei würde es sich dann um ein Kreismodul handeln).

Der Datenbus 5 ist zumindest einfach ausgeführt und mit je zwei Radmodulen 7 und Modul 6 verbunden.

Als Energieversorgung sind zumindest zwei unabhängige Energieversorgungsquellen Bat1, Bat2 notwendig. Bei den Bremsmodulen 7 kann die Aufteilung wie in der Figur dargestellt diagonal oder auch vorne/hinten erfolgen.

Zusammenfassend ist erfindungsgemäß ein Funktionsverlust je nach Fehler nicht vorhanden oder nur sehr gering. Nur bei einem Ausfall einer Energieversorgung Bat1, Bat2,oder Kurzschluß sämtlicher Busleitungen zu zwei Radmodulen 7 fallen zwei Bremsen aus. Hierbei würde es sich um einen Kreisausfall handeln. Ansonsten ist immer nur eine Radbremse 7 betroffen oder bei einem Ausfall innerhalb des Zentralmoduls 6 maximal die höheren Funktionen bei vollem Erhalten der Grundbremsfunktionen. Ist die Funktionsaufteilung für alle drei Rechner 11, 12, 13 des Zentralmoduls 6 gleich, so hat ein Rechnerfehler gar keinen Funktionsverlust zur Folge. Bei einem Bus Fehler können die Bremsen des jeweiligen Aktor/Rad-Paars 8, 9 ausfallen.

Die Systemarchitektur ist z.B. so konfigurierbar, daß bei einem Fehler nie die Hinterradbremsen allein zur Verfügung stehen. Die Systemarchitektur gewährt hierbei eine hohe Bremsverzögerung in allen Fehlerfällen.

Weiterhin gewährleistet die erfindungsgemäße Systemarchitektur, daß keine Fehlerfortpflanzung auftritt. Ein Fehler kann erkannt werden, bevor er sich auf andere Funktionen oder Module auswirkt. Weiterhin liegt eine hohe EMV-Sicherheit vor, da die Störaustrahlung minimiert ist. Die Leistungselektronik zum Ansteuern der Aktoren 8 ist im jeweiligen Radmodul 7 integriert und am oder nahe des jeweiligen Aktors 8 montiert. Weiterhin ist die Störfestigkeit hoch, besonders wenn das Zentralmodul 6 nahe am oder im Pedalsimulator 1 verbaut wird, so daß dann der analoge Signalübertragungsweg kurz ist.

Weiterhin sei angemerkt, daß die oben beschriebenen erfindungsgemäßen Funktionen und Systeme bzw. Module in jeder beliebigen Kombination alleine oder in ihrer Gesamtheit von der Erfindung umfaßt sind.

## Patentansprüche

1. Elektromechanisches Bremssystem, insbesondere für Kraftfahrzeuge, mit einer Fahrerbremswunsch-Erfassungseinrichtung (1) zum redundanten Erfassen einer Fahrerbetätigung eines Bremspedals (2) mittels einer geeigneten Sensorik (3), einem Zentralmodul (6) zum Ermitteln eines Bremssollwerts basierend auf Ausgangssignalen der Sensorik (3), zumindest einem Bremsmodul (7) zum Ansteuern von zumindest einer Radbremse (8, 9) basierend auf dem Bremssollwert, und einer Datenübertragungseinheit, die eine Datenverbindung zwischen dem Zentralmodul (6) und dem Bremsmodul (7) herstellt, wobei das Zentralmodul (6) eine Fehlererkennungsschaltung aufweist, die einen Fehler bei der Ermittlung des Bremssollwerts erkennt,
**dadurch gekennzeichnet,**
**daß** das Zentralmodul (6) zur Ermittlung des Bremssollwerts ABS, ASR, Fahrdynamikregelungen, ICC, Bremsassistent oder Hillholder oder andere höhere Funktionen des Bremssystems berücksichtigt,
**daß** das Zentralmodul (6) drei redundante Rechner (11, 12, 13) aufweist, die den Bremssollwert basierend auf Pedalfunktionen ermitteln und auf zumindest zwei dieser redundanten Rechner (11, 13) zusätzlich ABS, ASR, Fahrdynamikregelungen, ICC, Bremsassistent oder Hillholder oder andere höhere Funktionen des Bremssystems implementiert sind,
und **daß** das Zentralmodul (6) zum Konsolidieren und Überwachen der Pedalfunktionen einen Voter/Monitor (4) aufweist und ein Vergleicher gebildet ist, der die Rechner (11, 13), welche ABS, ASR, Fahrdynamikregelungen, ICC, Bremsassistent oder Hillholder oder andere höhere Funktionen des Bremssystems ausführen, überwacht, wobei im Fehlerfall diese Funktionen abgeschaltet werden.

2. Bremssystem nach Anspruch 1,
**dadurch gekennzeichnet, daß** das Zentralmodul (6) in einem Gehäuse (10) des Pedalsimulators (1) integriert ist.

3. Bremssystem nach Anspruch 1 oder 2,
**dadurch gekennzeichnet, daß** zumindest zwei unabhängige Energieversorgungsquellen (Bat1, Bat2) vorgesehen sind und jede Energieversorgungsquelle (Bat1, Bat2) mindestens einen Rechner (11, 12, 13) versorgt.

4. Bremssystem nach zumindest einem der vorangehenden Ansprüche 1 bis 3,
**dadurch gekennzeichnet, daß** das Zentralmodul (6) die redundanten Ausgangssignale des Pedalsimulators (1) zumindest zwei getrennten Meßkanälen zuführt, wobei zumindest zwei Rechner (von 11, 12, 13) die von den Meßkanälen gewandelten Daten erhalten.

5. Bremssystem nach zumindest einem der vorangehenden Ansprüche 1 bis 4,
**dadurch gekennzeichnet, daß** die Datenübertragungseinheit zwischen dem Zentralmodul (6) und den Radmodulen (7) ein Datenbus (5) ist.

6. Bremssystem nach zumindest einem der vorangehenden Ansprüche 1 bis 5,
**dadurch gekennzeichnet, daß** der Pedalsimulator (1) zwei Pedalwegsensoren und einen Pedalkraftsensor aufweist.

7. Bremssystem nach zumindest einem der vorangehenden Ansprüche 1 bis 6,
**dadurch gekennzeichnet, daß** das Bremsmodul (7) eine Fehlererkennung basierend auf lokalen aktorspezifischen Signalen wie beispielsweise Aktorstrom, Aktorposition, Spannkraft durchführt und bei einer Fehlererkennung eine entsprechende Meldung an das Bremssystem ausgibt, sich abschaltet und/oder eine Bremssollwertanpassung durchführt.

8. Bremssystem nach zumindest einem der vorangehenden Ansprüche 1 bis 7,
**dadurch gekennzeichnet, daß** die Fehlererkennung modellgestützt ist.

9. Bremssystem nach zumindest einem der vorangehenden Ansprüche 1 bis 8,
**dadurch gekennzeichnet, daß** das Bremsmodul (7) eine von einer Leistungselektronik getrennte Abschalteinheit (14) mit Zugriff durch das Zentralmodul (6) aufweist.

10. Bremssystem nach zumindest einem der vorangehenden Ansprüche 1 bis 9,
**dadurch gekennzeichnet, daß** das Zentralmodul (6) eine Abschalteinheit (14) aufweist.

11. Bremssystem nach Anspruch 9 oder 10,
**dadurch gekennzeichnet, daß** die Abschalteinheit (14) als Teil der Leistungselektronik in dem Bremsmodul (7), auf das das Zentralmodul (6) einen Zugriff besitzt, ausgebildet ist.

## Claims

1. An electromechanical brake system, especially for motor vehicles, including a detection device (1) of any braking request by the driver for the redundant registration of the driver depressing a brake pedal (2) by means of a suitable sensor system (3), a central module (6) for calculating a nominal braking value based on output signals from the sensor system (3), at least one brake module (7) for controlling at least one wheel brake (8, 9) based on the nominal braking value, and a data transmission unit which provides a data link between the central module (6) and the brake module (7), with the central module (6) including a fault-recognition circuit that recognizes faults in the calculation of the nominal braking value, **characterized in that** the central module (6), when calculating the nominal braking value, takes into account ABS, TCS, driving dynamics controls, ICC, braking assistant, or hill-holder or any other higher functions of the brake system, **in that** the central module (6) comprises three redundant computers (11, 12, 13) which calculate the nominal braking value on the basis of pedal functions, and additionally ABS, TCS, driving dynamics controls, ICC, braking assistant, or hill-holder or any other higher functions of the brake system are implemented on at least two of these redundant computers (11, 13), and **in that** the central module (6) displays a voter/monitor (4) for consolidating and monitoring the pedal functions, and a comparison unit is formed which monitors the computers (11, 13) that carry out ABS, TCS, driving dynamics controls, ICC, braking assistant, or hill-holder, or any other higher functions of the brake system, these functions being switched off if there is a fault.

2. A brake system according to claim 1, **characterized in that** the central module (6) is integrated into a housing (10) for the pedal simulator (1).

3. A brake system according to claim 1 or 2, **characterized in that** at least two independent sources of energy (Bat1, Bat2) are provided and each of these sources of energy (Bat1, Bat2) feeds at least one computer (11, 12, 13).

4. A brake system according to at least one of the preceding claims 1 to 3, **characterized in that** the central module (6) feeds the redundant output signals from the pedal simulator (1) to at least two separate measurement channels, in which case at least two computers (out of 11, 12, 13) receive the data converted by the measurement channels.

5. A brake system according to at least one of the preceding claims 1 to 4, **characterized in that** the data transmission unit between the central module (6) and the wheel modules (7) is a data bus (5).

6. A brake system according to at least one of the preceding claims 1 to 5, **characterized in that** the pedal simulator (1) includes two pedal travel sensors and one pedal force sensor.

7. A brake system according to at least one of the preceding claims 1 to 6, **characterized in that** the brake module (7) carries out fault recognition based on local, actor-specific signals such as actor current, actor position, tension force, and if it recognises a fault sends a corresponding message to the brake system, switches itself off, and/or carries out an adjustment of the nominal braking value.

8. A brake system according to at least one of the preceding claims 1 to 7, **characterized in that** the fault-recognition system is model-supported.

9. A brake system according to at least one of the preceding claims 1 to 8, **characterized in that** the brake module (7) includes a switching-off unit (14) separated from a power electronics unit with access through the central module (6).

10. A brake system according to at least one of the preceding claims 1 to 9, **characterized in that** the central module (6) includes a switching-off unit (14).

11. A brake system according to claim 9 or 10, **characterized in that** the switching-off unit (14) is formed as part of the power electronics unit in the brake module (7) to which the central module (6) has access.

## Revendications

1. Système de freinage électromécanique, en particulier pour des véhicules automobiles, avec un dispositif de détection du souhait de freinage par le conducteur (1), pour appréhender de façon redondante un actionnement par le conducteur d'une pédale de frein (2), au moyen d'une sensorique (3) appropriée, un module central (6), pour déterminer une valeur de consigne de freinage d'après des signaux sortis de la sensorique (3), au moins un module de freinage (7), pour commander au moins un frein de roue (8, 9) d'après la valeur de consigne de freinage, et une unité de transfert de données, établissant une liaison de données entre le module central (6) et le module de freinage (7), le module central (6) présentant un circuit d'identification d'erreur, identifiant une erreur lors de la détermination de la valeur de consigne de freinage,
**caractérisé en ce que**
le module central (6), pour déterminer la valeur de consigne de freinage, prend en compte des fonctions ABS, ASR, des régulations dynamiques de roulage, un ICC, un assistant au freinage ou un élément de maintien en colline, ou d'autres fonctions supérieures du système de freinage, **en ce que** le module central (6) présente trois calculateurs (11, 12, 13) redondants, déterminant la valeur de consigne de freinage d'après des fonctions de pédale et, sur au moins deux de ces calculateurs (11, 13) redondants, étant mises en oeuvre, en plus, des fonctions ABS, ASR, des régulations dynamiques de roulage, un ICC, un assistant au freinage ou un élément de maintien en colline, ou d'autres fonctions supérieures du système de freinage,
et **en ce que** le module central (6), afin de consolider et de surveiller les fonctions de pédale, présente un élément de vote/surveillance (4), et un comparateur est formé, qui surveille les calculateurs (11, 13), qui appliquent des fonctions ABS, ASR des régulations dynamiques de roulage, ICC, assistant au freinage ou élément de maintien en colline, ou d'autres fonctions supérieures du système de freinage, ces fonctions étant mises hors service en cas d'erreur.

2. Système de freinage selon la revendication 1,
**caractérisé en ce que** le module central (6) est intégré dans un boîtier (10) du simulateur de pédale (1).

3. Système de freinage selon la revendication 1 ou 2,
**caractérisé en ce qu'**au moins deux sources d'alimentation en énergie (Bat1, Bat2) indépendantes sont prévues, et chaque source d'alimentation en énergie (Bat1, Bat2) alimente au moins un calculateur (11, 12, 13).

4. Système de freinage selon au moins l'une des revendications 1 à 3 précédentes,
**caractérisé en ce que** le module central (6) amène les signaux de sortie redondants du simulateur de pédale (1) au moins à deux canaux de mesure séparés, au moins deux calculateurs (parmi 11, 12, 13) obtenant par les canaux de mesure les données converties.

5. Système de freinage selon au moins l'une des revendications 1 à 4 précédentes,
**caractérisé en ce que** l'unité de transfert de données est un bus de données (5), installé entre le module central (6) et les modules de roue (7).

6. Système de freinage selon au moins l'une des revendications 1 à 5 précédentes,
**caractérisé en ce que** le simulateur de pédale (1) présente deux capteurs de course de pédale et un capteur de force de pédale.

7. Système de freinage selon au moins l'une des revendications 1 à 6 précédentes,
**caractérisé en ce que** le module de frein (7) effectue une identification d'erreur d'après des signaux locaux spécifiques à des acteurs, tel que, par exemple, un courant d'acteur, une position d'acteur, une force de serrage et, en cas d'identification d'une erreur, émet une information correspondante à destination du système de freinage, se met hors service et/ou effectue une adaptation de valeur de consigne de freinage.

8. Système de freinage selon au moins l'une des revendications 1 à 7 précédentes,
**caractérisé en ce que** l'identification d'erreur est assistée par modélisation.

9. Système de freinage selon au moins l'une des revendications 1 à 8 précédentes,
**caractérisé en ce que** le module de freinage (7) présente une unité de mise hors service (14), séparée d'une électronique de puissance, à laquelle le module central (6) dispose d'un accès.

10. Système de freinage selon au moins l'une des revendications 1 à 9 précédentes,
**caractérisé en ce que** le module central (6) présente une unité de mise hors service (14).

11. Système de freinage selon au moins la revendication 9 ou 10,
**caractérisé en ce que** l'unité de mise hors service (14) est réalisée sous la forme de partie de l'électronique de puissance dans le module de freinage (7), à laquelle le module central (6) dispose d'un accès.
